# EUROPÄISCHE PATENTANMELDUNG

(11) **EP 4 663 381 A1**
(43) Veröffentlichungstag der Anmeldung: **17.12.2025**
(21) Anmeldenummer: 24181133.0
(22) Anmeldetag: 10.06.2024
(51) Int. Cl.: B29C 64/112, B29C 64/188, B29C 64/364, B29C 64/393, B33Y 10/00, B33Y 30/00, B33Y 40/00, B33Y 50/02, B33Y 80/00, A61C 13/00

(54) **VERFAHREN UND DRUCKER ZUM HERSTELLEN EINES DENTALOBJEKTS**

(71) Anmelder: Ivoclar Vivadent AG, 9494 Schaan (LI)
(72) Erfinder: Bitar, Nicola, 9462 Montlingen (CH); Reinhardt, Jonas, 7206 Igis (CH); Ritzberger, Christian, 9472 Grabs (CH)
(74) Vertreter: Baldus, Oliver

(57) **Zusammenfassung**

Verfahren zum Herstellen eines Dentalobjektes, mit den Schritten eines Druckens (S101) einer Druckschicht des Dentalobjektes; eines Verdampfens (S102) eines Lösungsmittels der gedruckten Druckschicht; und eines Erfassens (S103) eines Temperaturverlaufs beim Verdampfen des Lösungsmittels.

## Beschreibung

Die vorliegende Erfindung betrifft ein Verfahren zum Herstellen eines Dentalobjektes und einen Drucker zum Herstellen des Dentalobjektes.

Das Trocknen oder Abdampfen von anorganisch gefüllten Trägerflüssigkeiten auf Basis von polaren oder unpolaren Lösungsmitteln, wie z.B. Wasser, Ethanol, Ethylenglykol oder deren Mischungen, stellt eine Herausforderung dar und verursacht beim dreidimensionalen Drucken einen erheblichen Zeitaufwand. Daher sollte das Trocknen jeder einzelnen Druckschicht möglichst schnell geschehen.

Im Allgemeinen ist es schwierig zu bestimmen, wann eine Druckschicht vollständig getrocknet ist. In der Regel werden Erfahrungswerte verwendet, um die angemessene Trocknungszeit für jede Druckschicht zu ermitteln. Eine zuverlässige Überwachung des Trocknungsgrades wird jedoch nicht durchgeführt. Grundsätzlich sollte die Trägerflüssigkeit so getrocknet werden, dass eine mechanische Verfestigung und keine Risse entstehen.

Es ist die technische Aufgabe der vorliegenden Erfindung, ein dreidimensionales Druckverfahren zu verbessern.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Herstellen eines Dentalobjektes gelöst, mit den Schritten eines Druckens einer Druckschicht des Dentalobjektes; eines Verdampfens eines Lösungsmittels der gedruckten Druckschicht; und eines Erfassens eines Temperaturverlaufs beim Verdampfen des Lösungsmittels. Durch das Verfahren wird der technische Vorteil erreicht, dass die Trocknung einer lösungsmittelbasierten Trägerflüssigkeit in der Druckschicht überwacht und gesteuert werden kann.

In einer technisch vorteilhaften Ausführungsform des Verfahrens wird das Verfahren auf Basis des erfassten Temperaturverlaufs gesteuert. Dadurch wird beispielsweise der technische Vorteil erreicht, dass eine aktive Regelung oder Steuerung des Druckers auf Basis einer exothermen oder endothermen Reaktion der Druckschicht durchgeführt werden kann.

In einer weiteren technisch vorteilhaften Ausführungsform des Verfahrens wird die nächste Druckschicht gedruckt, wenn eine Temperatur des Temperaturverlaufs einen vorgegebenen Wert erreicht. Dadurch wird beispielsweise der technische Vorteil erreicht, dass das Verfahren unmittelbar bei Erreichen der vorgegebenen Temperatur oder Temperaturverlaufs fortgesetzt werden kann.

In einer weiteren technisch vorteilhaften Ausführungsform des Verfahrens wird ein Luftstrom zum Verdampfen des Lösungsmittels auf die Druckschicht gerichtet. Dadurch wird beispielsweise der technische Vorteil erreicht, dass das Verdampfen des Lösungsmittels beschleunigt werden kann und sich ein Temperaturabfall erhöht.

In einer weiteren technisch vorteilhaften Ausführungsform des Verfahrens wird ein Luftstrom auf die Druckschicht auf Basis des erfassten Temperaturverlaufs gesteuert. Dadurch wird beispielsweise der technische Vorteil erreicht, dass der Luftstrom je Temperaturverlauf angepasst werden kann.

In einer weiteren technisch vorteilhaften Ausführungsform des Verfahrens wird die Temperatur, die Luftfeuchtigkeit oder die zugeführte Luftmenge des Luftstroms auf Basis des erfassten Temperaturverlaufs gesteuert. Dadurch wird beispielsweise der technische Vorteil erreicht, dass besonders geeignete Parameter des Luftstroms verändert werden können.

In einer weiteren technisch vorteilhaften Ausführungsform des Verfahrens wird die Druckschicht zwischen einer Maximaltemperatur und einer Minimaltemperatur gehalten. Dadurch wird beispielsweise der technische Vorteil erreicht, dass das Schmelzen eines Unterstützungsmaterials verhindert werden kann.

In einer weiteren technisch vorteilhaften Ausführungsform des Verfahrens wird der Temperaturverlauf durch eine Infrarotkamera oder einen Sensor für elektromagnetische Strahlung erfasst. Dadurch wird beispielsweise der technische Vorteil erreicht, dass sich der Temperaturverlauf effizient erfassen lässt und je nach Bauhöhe die Trocknung angepasst werden kann.

In einer weiteren technisch vorteilhaften Ausführungsform des Verfahrens wird der Temperaturverlauf durch einen selbstlernenden Algorithmus erfasst. Dadurch wird beispielsweise der technische Vorteil erreicht, dass statt einem Infrarot-Sensor ein Algorithmus verwendet werden kann und sich der Aufwand verringert.

In einer weiteren technisch vorteilhaften Ausführungsform des Verfahrens wird der erfasste Temperaturverlauf mit einem vorgegebenen Temperaturverlauf verglichen. Dadurch wird beispielsweise der technische Vorteil erreicht, dass Abweichungen zwischen dem vorgegebenen Temperaturverlauf und dem erfassten Temperaturverlauf bestimmt werden können.

In einer weiteren technisch vorteilhaften Ausführungsform des Verfahrens wird eine Dicke oder Feuchtigkeit der Druckschicht oder Menge der Trägerflüssigkeit auf Basis des Vergleichs ermittelt. Dadurch wird beispielsweise der technische Vorteil erreicht, dass sich Informationen über Druckeigenschaften aus dem Temperaturverlauf gewinnen lassen.

In einer weiteren technisch vorteilhaften Ausführungsform des Verfahrens wird eine Funktion des Druckkopfes auf Basis des Vergleichs ermittelt. Dadurch wird beispielsweise der technische Vorteil erreicht, dass eine Fehlfunktion des Druckkopfes oder einzelner Druckdüsen erkannt werden kann. Zudem kann eine Tropfengröße des Druckkopfes bestimmt werden.

Gemäß einem zweiten Aspekt wird die technische Aufgabe durch einen Drucker zum Herstellen eines Dentalobjektes gelöst, mit einem Verdampfungselement zum Verdampfen eines Lösungsmittels der gedruckten Druckschicht; und einem Erfassungselement zum Erfassen eines Temperaturverlaufs beim Verdampfen des Lösungsmittels. Durch den Drucker werden die gleichen technischen Vorteile wie durch das Verfahren nach dem ersten Aspekt erreicht.

In einer technisch vorteilhaften Ausführungsform des Druckers umfasst der Drucker eine Infrarotkamera oder einen Sensor für elektromagnetische Strahlung zum Erfassen des Temperaturverlaufs.

In einer weiteren technisch vorteilhaften Ausführungsform des Druckers umfasst der Drucker ein Gebläse zum Erzeugen eines Luftstroms auf die Druckschicht. Dadurch wird beispielsweise der technische Vorteil erreicht, dass das Verdampfen des Lösungsmittels beschleunigt werden kann und sich ein Temperaturabfall im Temperaturverlauf erhöht. Dieser Temperaturabfall, der durch das Gebläse auf der Oberfläche der Druckschicht erzeugt wird, kann verwendet werden, um einen Rückschluss auf den Lösungsmittelgehalt der Druckschicht zu erhalten. Das erneute Ansteigen der Temperatur der Druckschicht, deutet darauf hin, dass sich der Lösungsmittelgehalt sich in der Druckschicht verringert.

Ausführungsbeispiele der Erfindung sind in den Zeichnungen dargestellt und werden im Folgenden näher beschrieben.

Es zeigen:
- Fig. 1: eine schematische Ansicht eines Aufbaus eines 3D-Druckers mit Kühlung;
- Fig. 2: ein schematisches Diagramm der Oberflächentemperatur beim Trocknen einer Druckschicht; und
- Fig. 3: ein Blockdiagramm eines Verfahrens zum Herstellen eines Dentalobjektes.

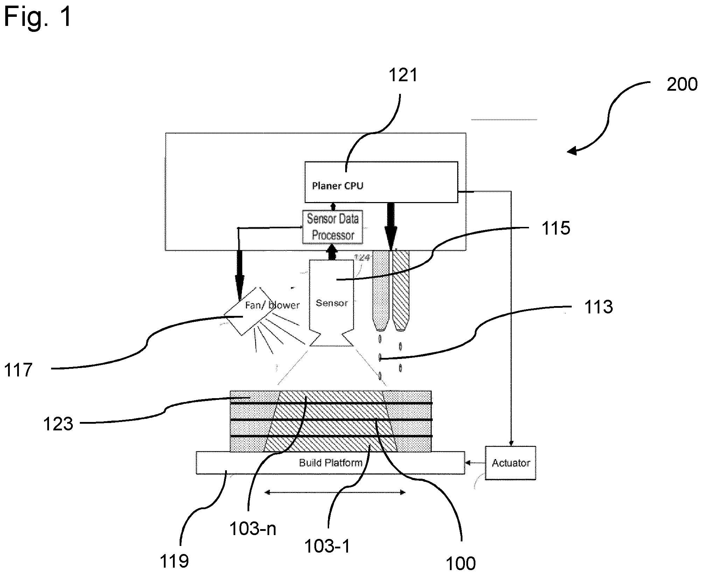

Fig. 1 zeigt eine schematische Ansicht eines Aufbaus eines 3D-Druckers 200. Der Drucker 200 trägt eine Trägerflüssigkeit 113 in aufeinanderfolgenden Druckschichten (Layer) 103-1, ..., 103-n auf die bewegliche Bauplattform 119 auf, um so das Dentalobjekt 100 zu erzeugen.

Die Druckschicht 103-1, ..., 103-n kann aus einer Trägerflüssigkeit 113 mit ein- oder mehrphasigem anorganischem Material aufgebaut sein, wie z.B. aus dotiertem teil- oder vollstabilisiertem Zirkonoxid (Stabilisatoren: Y3+, La3+, Mg2+, Ca2+, Ce3+ oder Ce4+ oder deren Kombinationen) oder aus Aluminiumoxid oder MgO-dotiertem Aluminiumoxid oder aus deren Kombination (anorganisches Komposit).

Die Trägerflüssigkeit 113 kann außerdem ein organisches Additiv enthalten, das die Trocknung positiv beeinflusst und die Festigkeit des Dentalobjektes 100 im ungesinterten Zustand erhöht, wie z.B. Diole, Triole, Polyvinylalkohole, Polyethylenglykole, Polyacrylate, Polyvinylpyrolidone und Cellulosederivate.

Die Trocknungszeiten der Druckschichten 103-1, ..., 103-n variieren aufgrund einer unterschiedlichen Menge an Trägerflüssigkeit 113, einer Bauhöhe, einer Temperatur der Bauplattform oder einem Feststoffanteil, die jeweils für eine Druckschicht 103-1, ..., 103-n verwendet wird. Bei jeder Druckschicht 103-1, ..., 103-n wird eine andere Menge der Trägerflüssigkeit 113 aufgetragen, da jede Druckschicht 103-1, ..., 103-n durch ein anderes zweidimensionales Muster gebildet wird (geslictes Bild).

Im Allgemeinen ist es schwierig festzustellen, in welchem Zustand der Trocknung sich die Trägerflüssigkeit 113 an verschiedenen Stellen gerade befindet. Auch verschiedene äußere Einflüsse, wie Temperatur oder Luftfeuchtigkeit, haben einen Einfluss auf das Trocknungsverhalten der Trägerflüssigkeit 113.

Eine Infrarotkamera oder ein Sensor für elektromagnetische Strahlung wird als Erfassungselement 115 verwendet, um den zeitlichen Temperaturverlauf 107 einer neuen feuchten Druckschicht 103-1, ..., 103-n zu bestimmen, während mit einem Gebläse 117 als Verdampfungselement ein Luftstrom auf die Druckschicht 103-1, ..., 103-n geblasen wird. Der Luftstrom kann entweder kalte oder warme Luft sein. Das Erfassungselement 115 erzeugt eine zeitliche Folge digitaler Daten, die die Temperatur der Druckschicht wiedergeben.

Durch den erzeugten Luftstrom auf der Oberfläche der neuen Druckschicht 103-1, ..., 103-n wird die Verdunstung von Wasser beschleunigt, das als Lösungsmittel verwendet wird. Aufgrund der beschleunigten Verdunstung wird ein Abkühlen der Druckschicht 103-1, ..., 103-n verursacht. Dieser Effekt wird als evaporative Abkühlung, Verdunstungsenthalpie oder Verdunstungskälte bezeichnet. Die Energie, die für die Verdunstung benötigt wird, wird der Druckschicht 103-1, ..., 103-n entzogen. Daher bewirkt der Verdunstungsprozess eine Abkühlung der Druckschicht 103-1, ..., 103-n.

Der erzeugte Luftstrom führt dampfgesättigte Luft ab und ungesättigte Luft zu, so dass der höhere Unterschied im chemischen Potential oder Konzentrationsgradient eine weitere Verdunstung begünstigt. Wenn Luft in Bewegung ist, die eine maximale Kapazität für die Aufnahme des Lösungsmittels noch nicht erreicht hat und auf die feuchte Druckschicht 103-1, ..., 103-n mit dem Lösungsmittel trifft, nimmt diese das Lösungsmittel als Verdunstungsgas auf.

Der Luftstrom verstärkt so die Temperaturdifferenz auf der Oberfläche der Druckschicht 103-1, ..., 103-n, so dass ein Temperaturverlauf mit einem tieferen Temperaturminimum erfasst wird. Dies führt zu einer verbesserten Sensitivität der Messung. Anhand des Temperaturverlaufs kann anschließend bestimmt werden, ob mit dem Drucken der nächsten Druckschicht 103-n+1 begonnen werden kann.

Dies ermöglicht eine Zeitersparnis und eine qualitativ hochwertigere Trocknung der Druckschicht 103-1, ..., 103-n. Zu schnelles Trocknen kann demgegenüber zu Rissen in der Druckschicht 103-1, ..., 103-n führen. Dies stellt bei keramischen Grünkörpern (Körper im ungesinterten Zustand) ein Problem dar, da die Gründichte im Bereich von 40 - 60 % bezogen auf die theoretische Enddichte liegt. Risse im ungesinterten Grünkörper führen zu unzureichender Endfestigkeit nach dem Sinterprozess.

Die Steuereinrichtung 121 (Controller) dient zum Steuern des Druckers 200 und zum Durchführen von Berechnungen. Die Steuereinrichtung 121 kann unterschiedliche Steuerungen in Abhängigkeit der Trägerflüssigkeit 113 durchführen, da verschiedene Trägerflüssigkeiten 113 unterschiedlich auf einen Luftstrom, eine Feuchtigkeit und eine Wärme reagieren. Zu diesem Zweck umfasst die Steuereinrichtung 121 beispielsweise eine zentrale Verarbeitungseinheit (CPU) und einen digitalen Speicher zum Speichern von Programmen und Daten, wie beispielsweise zum Speichern von Daten des Temperaturverlaufs.

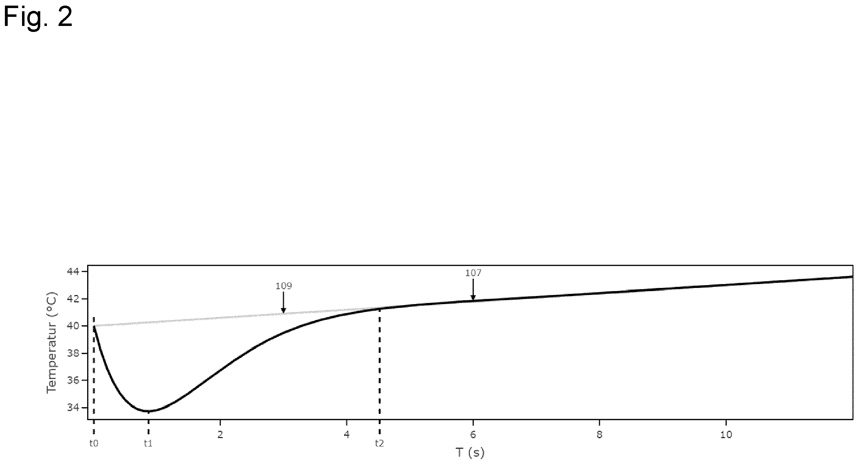

Fig. 2 zeigt ein schematisches Diagramm des Temperaturverlaufs 107 beim Trocknen einer Druckschicht 103-1, ..., 103-n mit Wasserverdunstung durch einen Luftstrom und einen Temperaturverlauf 109 ohne Luftstrom. Anhand des Temperaturverlaufs 107 kann durch die Verdunstungskälte bestimmt werden, in welchem Trocknungsstadium sich die aufgebrachte Druckschicht 103-1, ..., 103-n gerade befindet.

Zunächst sinkt die Oberflächentemperatur auf ein Minimum, bis diese nach einer bestimmten Zeit wieder steigt.

Ab der Zeit t0 findet eine starke Abkühlung durch Wasserverdunstung statt. Das verdunstende Wasser entzieht der Druckschicht 103-1, ..., 103-n Wärmeenergie, so dass die Temperatur der Druckschicht 103-1, ..., 103-n abnimmt. Die Abnahme der Temperatur ist von einem Luftstrom abhängig, beispielsweise wie stark ein Gebläse auf die Druckschicht 103-1, ..., 103-n wirkt. Zur Zeit t1 im Minimum des Verlaufs ist die Wasserverdunstung beendet und die Temperatur der Druckschicht 103-1, ..., 103-n steigt wieder an. Zur Zeit t2 wird die nächste Druckschicht 103-n+1 aufgetragen, sobald eine vorgegebene Temperatur erreicht ist.

Das Abkühlen der Druckschicht 103-1, ..., 103-n wird mit dem Erfassungselement 115 erfasst und aufgezeichnet. Dabei entsteht die charakteristische Temperaturverlaufskurve 107, die einen zeitlichen Verlauf der Oberflächentemperatur der Druckschicht 103-1, ..., 103-n zeigt.

Mit der Evaporation des Lösungsmittels und der Aufzeichnung des Temperaturverlaufes 107 kann der genaue Trocknungsstatus der Druckschicht 103-1, ..., 103-n ermittelt werden. Auf Basis des Temperaturverlaufes 107 kann das Druckverfahren auf verschiedene Weise und zu unterschiedlichen Zeiten gesteuert werden.

Anhand des Temperaturverlaufs 107 kann beispielsweise aktiv für jede Druckschicht 103-1, ..., 103-n der optimale Zeitpunkt zum Drucken der nächsten Druckschicht 103-n+1 ermittelt werden. Die Daten des Temperaturverlaufs werden beispielsweise als digitale Daten in einem Speicher der Steuereinrichtung 121 gespeichert.

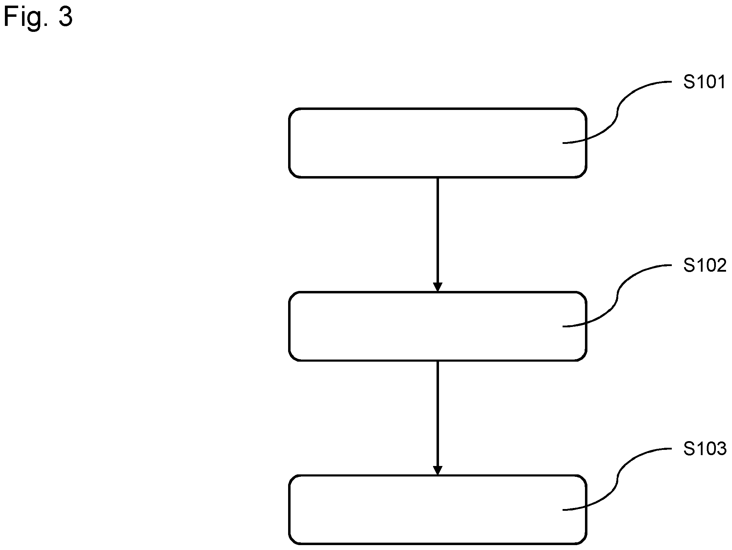

Fig. 3 zeigt ein Diagramm der Messung der Oberflächentemperatur beim Trocknen einer Druckschicht 103-1, ..., 103-n. Der Feststoffanteil beträgt 70 Gew. %, Wasser ca. 27 Gew. % und Binder ca. 3 Gew.%. Die Dichte der Druckschicht 103-1, ..., 103-n beträgt 2,4 g/cm³ bis 3,6 g/cm³ ohne Berücksichtigung der organischen Komponenten für Yttriumstabilisiertes ZrO2. Bei Berücksichtigung der organischen Komponenten liegt die Dichte niedriger.

Im gezeigten Diagramm wird ein Luftstrom mit einer Luftmenge von 5 l/min und einer Temperatur von 50°C erzeugt. Die relative Luftfeuchtigkeit beträgt weniger als 60%. Bei einem Zirkon-Schlicker als Trägerflüssigkeit 113 mit einem Wasseranteil von 30 Gew.% und bei einer Dicke der Druckschicht 103-1, ..., 103-n von 6 µm wird ein Abfall der Temperatur nach dem Drucken von 10°C ermittelt. Nach einer Zeitspanne verringert sich die Temperaturdifferenz zwischen der Oberfläche der Druckschicht 103-1, ..., 103-n und der gedruckten Druckschicht 103-1, ..., 103-n auf 0°C.

Über den Temperaturverlauf 107 kann erfasst werden, ob der Druckkopf keine oder zu wenig Trägerflüssigkeit 113 abgegeben hat. Wenn beispielsweise in einem gedruckten Bereich kein charakteristisches Temperaturprofil 107 mit einem Minimum erfasst wird, hat der Druckkopf dort keine Trägerflüssigkeit 113 abgegeben. Auf diese Weise können Düsenausfälle des Druckkopfes ermittelt werden. Dabei kann ein einzelner Pixel- oder Düsenausfall ermittelt werden. Zudem kann erkannt werden, ob eine gleichmäßige Schichtauftragung vorliegt. Der Druckkopf wird nicht angeblasen, damit die Düsen nicht verstopfen oder eintrocknen. Ein ideales Prozessfenster begünstigt die Koaleszenz, d.h. das Verbinden der einzelnen Schichten und das rissfreie Trocknen.

Das Verfahren ist unabhängig von einer Klimatisierung des Bauraums. Daher ist es möglich, in verschiedener Umgebung zu drucken, wie beispielsweise bei verschiedener Temperatur und Luftfeuchtigkeit, ohne dass sich eine Qualität des Druckes verringert. Auf eine Raumklimatisierung kann daher verzichtet werden.

Zudem ist es möglich, verwendetes Unterstützungsmaterial 123, wie beispielsweise Wachs, während dem Druckprozess der Druckschicht 103-1, ..., 103-n in einem vorgegebenen Temperaturfenster zwischen einer Maximaltemperatur und einer Minimaltemperatur zu halten. Ein zu starkes Abkühlen des Unterstützungsmaterials 123 kann beispielsweise eine Schrumpfung zur Folge haben. Dies verringert die Druckgenauigkeit des Dentalobjektes 100. Wenn das Unterstützungsmaterial 123 hingegen zu heiß wird, schmilzt dieses. In diesen Fällen wird das Dentalobjekt 100 auch nicht in der gewünschten Genauigkeit gedruckt. Der gesamte Schichtaufbau weist dann die gleiche Temperatur wie die Bauplattform auf.

Des Weiteren ist es möglich, anhand der Position des Minimums im Temperaturverlauf 107 oder der Trocknungszeit zu erfassen, in welcher Dicke die Trägerflüssigkeit 113 aufgetragen wurde, d.h. die Druckschicht 103-1, ..., 103-n gedruckt wurde. Zudem kann der Feststoffgehalt der Trägerflüssigkeit 113 festgestellt werden oder ob sich dieser während dem Druck verändert. Dies kann im Temperaturverlauf 107 dadurch erfasst werden, dass die Trägerflüssigkeit 113 in kürzerer oder längerer Zeit trocknet als durch einen Referenzwert vorgegeben.

Zudem kann ein normierter Testdruck durchgeführt werden, bei dem die Parameter vorgegeben sind. Falls die gemessenen Parameter im Temperaturverlauf 107 von den vorgegebenen Parametern abweichen, weist die Trägerflüssigkeit 113 eine andere Beschaffenheit als erforderlich auf. Auf diese Weise kann eine ungeeignete Trägerflüssigkeit 113 erkannt werden und an den Benutzer eine Warnung ausgegeben werden, dass die Trägerflüssigkeit 113 nicht den vorgegebenen Normen entspricht.

Um eine homogene und rissfreie Trocknung der Druckschicht 103-1, ..., 103-n zu erhalten, darf die Trägerflüssigkeit 113 im flüssigen Zustand nicht zu schnell trocknen. Hierzu kann die zugeführte Luftmenge, die Temperatur oder der Luftfeuchtegrad des Luftstroms in der jeweiligen Phase der Trocknung angepasst werden. Je nach Status der Trocknung kann beispielsweise die Luftmenge verringert und danach wieder erhöht werden.

Auch die Temperatur von zugeführter Heißluft kann verringert werden, bis die Trägerflüssigkeit 113 eine bestimmte Festigkeit aufweist und keine Risse mehr bilden kann. Danach kann die Temperatur wieder erhöht werden, so dass die Trägerflüssigkeit 113 die richtige Temperatur für die nächste Druckschicht 103-n+1 schnell erreicht.

Fig. 3 zeigt ein Blockdiagramm des Verfahrens zum Herstellen des Dentalobjektes 100. Das Verfahren umfasst den Schritt S101 des Druckens einer Druckschicht 103-1, ..., 103-n des Dentalobjektes 100. In Schritt S102 wird das Lösungsmittel 105 der gedruckten Druckschicht 103-1, ..., 103-n verdampft. Im Schritt S103 wird der Temperaturverlauf 107 beim Verdampfen des Lösungsmittels 105 erfasst.

Durch das Verfahren kann der Trocknungsgrad und der Verdampfungsprozess mit hoher Genauigkeit überwacht werden. Der Prozess des schichtweisen Aufbaus von keramischen Druckschichten 103-1, ..., 103-n kann dementsprechend gesteuert durchgeführt werden, um ein inhomogenes Trocken oder die Ausbreitung von Rissen zu vermeiden.

Mit dem Verfahren kann die Druckschicht 103-1, ..., 103-n schnell und rissfrei getrocknet werden. Die Messung des Trocknungszustandes mittels des Temperaturverlaufes 107 ermöglicht eine weitere Steuerung, um das Trocknen zu beschleunigen oder zu verlangsamen. Dadurch kann mit einer höheren Geschwindigkeit, besseren Qualität und mit weniger Ausschuss gedruckt werden. Das Verfahren ist unabhängig von einer Luftfeuchtigkeit und einem Luftdruck. Daher ist keine Klimatisierung erforderlich und das Verfahren ist ressourcenschonender.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Dentalobjekt
- 103: Druckschicht
- 105: Lösungsmittel
- 107: Temperaturverlauf
- 109: Temperaturverlauf ohne Trocknung
- 111: Verdampfungselement
- 113: Trägerflüssigkeit
- 115: Erfassungselement
- 117: Gebläse
- 119: Bauplattform
- 121: Steuereinrichtung
- 123: Unterstützungsmaterial

- 200: Drucker

## Patentansprüche

1. Verfahren zum Herstellen eines Dentalobjektes (100), mit den Schritten:
- Drucken (S101) einer Druckschicht (103-1, ..., 103-n) des Dentalobjektes (100);
- Verdampfen (S102) eines Lösungsmittels (105) der gedruckten Druckschicht (103-1, ..., 103-n); und
- Erfassen (S103) eines Temperaturverlaufs (107) beim Verdampfen des Lösungsmittels (105).

2. Verfahren nach Anspruch 1, wobei das Verfahren auf Basis des erfassten Temperaturverlaufs (107) gesteuert wird.

3. Verfahren nach einem der vorangehenden Ansprüche, wobei die nächste Druckschicht (103-n+1) gedruckt wird, wenn eine Temperatur des Temperaturverlaufs (107) einen vorgegebenen Wert erreicht.

4. Verfahren nach einem der vorangehenden Ansprüche, wobei ein Luftstrom zum Verdampfen des Lösungsmittels (105) auf die Druckschicht (103-1, ..., 103-n) gerichtet wird.

5. Verfahren nach Anspruch 4, wobei der Luftstrom auf Basis des erfassten Temperaturverlaufs (107) gesteuert wird.

6. Verfahren nach Anspruch 5, wobei die Temperatur, die Luftfeuchtigkeit oder die zugeführte Luftmenge des Luftstroms auf Basis des erfassten Temperaturverlaufs (107) gesteuert wird.

7. Verfahren nach einem der vorangehenden Ansprüche, wobei die Druckschicht (103-1, ..., 103-n) zwischen einer Maximaltemperatur und einer Minimaltemperatur gehalten wird.

8. Verfahren nach einem der vorangehenden Ansprüche, wobei der Temperaturverlauf (107) durch eine Infrarotkamera oder einen Sensor für elektromagnetische Strahlung erfasst wird.

9. Verfahren nach einem der vorangehenden Ansprüche, wobei der Temperaturverlauf (107) durch einen selbstlernenden Algorithmus erfasst wird.

10. Verfahren nach einem der vorangehenden Ansprüche, wobei der erfasste Temperaturverlauf (107) mit einem vorgegebenen Temperaturverlauf (107) verglichen wird.

11. Verfahren nach Anspruch 10, wobei eine Dicke oder Feuchtigkeit der Druckschicht (103-1, ..., 103-n) oder Menge der Trägerflüssigkeit (113) auf Basis des Vergleichs ermittelt wird.

12. Verfahren nach Anspruch 10, wobei eine Funktion des Druckkopfes auf Basis des Vergleichs ermittelt wird.

13. Drucker (200) zum Herstellen eines Dentalobjektes (100), mit:
- einem Verdampfungselement (111) zum Verdampfen eines Lösungsmittels (105) der gedruckten Druckschicht (103-1, ..., 103-n); und
- einem Erfassungselement (115) zum Erfassen eines Temperaturverlaufs (107) beim Verdampfen des Lösungsmittels (105).

14. Drucker nach Anspruch 13, wobei der Drucker (200) eine Infrarotkamera oder einen Sensor für elektromagnetische Strahlung zum Erfassen des Temperaturverlaufs (107) umfasst.

15. Drucker nach Anspruch 13 oder 14, wobei der Drucker (200) ein Gebläse (117) zum Erzeugen eines Luftstroms auf die Druckschicht (103-1, ..., 103-n) umfasst.

## Geänderte Patentansprüche

### Geänderte Patentansprüche gemäss Regel 137(2) EPÜ.

1. Verfahren zum Herstellen eines Dentalobjektes (100), mit den Schritten:
- Drucken (S101) einer Druckschicht (103-1, ..., 103-n) des Dentalobjektes (100);
- Verdampfen (S102) eines Lösungsmittels (105) der gedruckten Druckschicht (103-1, ..., 103-n); und
- Erfassen (S103) eines Temperaturverlaufs (107) beim Verdampfen des Lösungsmittels (105),
wobei der erfasste Temperaturverlauf (107) mit einem vorgegebenen Temperaturverlauf (107) verglichen wird und eine Dicke oder Feuchtigkeit der Druckschicht (103-1, ..., 103-n) oder Menge der Trägerflüssigkeit (113) auf Basis des Vergleichs ermittelt wird.

2. Verfahren nach Anspruch 1, wobei das Verfahren auf Basis des erfassten Temperaturverlaufs (107) gesteuert wird.

3. Verfahren nach einem der vorangehenden Ansprüche, wobei die nächste Druckschicht (103-n+1) gedruckt wird, wenn eine Temperatur des Temperaturverlaufs (107) einen vorgegebenen Wert erreicht.

4. Verfahren nach einem der vorangehenden Ansprüche, wobei ein Luftstrom zum Verdampfen des Lösungsmittels (105) auf die Druckschicht (103-1, ..., 103-n) gerichtet wird.

5. Verfahren nach Anspruch 4, wobei der Luftstrom auf Basis des erfassten Temperaturverlaufs (107) gesteuert wird.

6. Verfahren nach Anspruch 5, wobei die Temperatur, die Luftfeuchtigkeit oder die zugeführte Luftmenge des Luftstroms auf Basis des erfassten Temperaturverlaufs (107) gesteuert wird.

7. Verfahren nach einem der vorangehenden Ansprüche, wobei die Druckschicht (103-1, ..., 103-n) zwischen einer Maximaltemperatur und einer Minimaltemperatur gehalten wird.

8. Verfahren nach einem der vorangehenden Ansprüche, wobei der Temperaturverlauf (107) durch eine Infrarotkamera erfasst wird.

9. Verfahren nach Anspruch 1, wobei eine Funktion des Druckkopfes auf Basis des Vergleichs ermittelt wird.

10. Drucker (200) zum Herstellen eines Dentalobjektes (100), mit:
- einem Verdampfungselement (111) zum Verdampfen eines Lösungsmittels (105) der gedruckten Druckschicht (103-1, ..., 103-n); und
- einem Erfassungselement (115) zum Erfassen eines Temperaturverlaufs (107) beim Verdampfen des Lösungsmittels (105); wobei
der Drucker (200) ausgebildet ist, den erfassten Temperaturverlauf (107) mit einem vorgegebenen Temperaturverlauf (107) zu vergleichen und eine Dicke oder Feuchtigkeit der Druckschicht (103-1, ..., 103-n) oder Menge der Trägerflüssigkeit (113) auf Basis des Vergleichs zu ermitteln.

11. Drucker nach Anspruch 10, wobei der Drucker (200) eine Infrarotkamera zum Erfassen des Temperaturverlaufs (107) umfasst.

12. Drucker nach Anspruch 10 oder 11, wobei der Drucker (200) ein Gebläse (117) zum Erzeugen eines Luftstroms auf die Druckschicht (103-1, ..., 103-n) umfasst.
